# EUROPÄISCHE PATENTSCHRIFT

(11) **EP 3 533 131 B1**
(45) Veröffentlichungstag und Bekanntmachung des Hinweises auf die Patenterteilung: **18.11.2020**
(21) Anmeldenummer: 17758808.4
(22) Anmeldetag: 08.08.2017
(51) Int. Cl.: H02J 50/10, H02J 50/40

(54) **ENERGIEÜBERTRAGUNGSVORRICHTUNG UND ENERGIEÜBERTRAGUNGSVERFAHREN**
ENERGY TRANSMISSION DEVICE AND ENERGY TRANSMISSION METHOD
DISPOSITIF DE TRANSFERT D'ÉNERGIE ET PROCÉDÉ DE TRANSFERT D'ÉNERGIE

(30) Priorität: 27.10.2016 DE 102016221225
(43) Veröffentlichungstag der Anmeldung: 04.09.2019
(73) Patentinhaber: Robert Bosch GmbH, 70442 Stuttgart (DE)
(72) Erfinder: EPPLER, Steffen, 71642 Ludwigsburg (DE); SCHUMANN, Philipp, 70469 Stuttgart (DE)
(86) Internationale Anmeldenummer: PCT/EP2017/070070
(87) Internationale Veröffentlichungsnummer: WO 2018/077504

(56) Entgegenhaltungen:
- WO-A1-2016/024869
- US-A1- 2016 079 798

## Beschreibung

Die vorliegende Erfindung bezieht sich auf eine Energieübertragungsvorrichtung zum kontaktlosen Übertragen von elektrischer Energie und ein entsprechendes Energieübertragungsverfahren.

### Stand der Technik

Die vorliegende Erfindung wird im Folgenden hauptsächlich in Bezug auf das Laden von tragbaren elektronischen Geräten, wie Mobiltelefonen oder Tablet-PCs, beschrieben. Die vorliegende Erfindung ist aber keineswegs auf diese Anwendung beschränkt und kann überall dort eingesetzt werden, wo elektrische Energie übertragen werden soll, z.B. beim Laden von Elektrofahrzeugen.

Elektronische Geräte, wie z.B. Mobiltelefone, verfügen üblicherweise über Batterien, welche für den Betrieb des Geräts die notwendige elektrische Energie liefern. Sind die Batterien leer, müssen diese geladen werden. Aus der WO 2016/024869 A1 ist ein System zur Energieübertragung bekannt.

Üblicherweise werden kabelgebundene Ladegeräte genutzt, welche über ein Kabel mit dem elektronischen Gerät verbunden werden und die Ladespannung zum Laden der Batterien bereitstellen. Da Kabel unpraktisch sind, kommen vermehrt auch drahtlose, insbesondere induktive, Ladeverfahren zum Einsatz. So betrifft die US 2016/079798 A1 ein kabelloses Ladegerät.

Bei induktiven Ladeverfahren wird die elektrische Energie zum Laden der Batterie von einer Sendespule, auch Primärseite, zu einer Empfängerspule, auch Sekundärseite, übertragen. Bei Verwendung jeweils einer Spule auf Primärseite und einer Spule auf Sekundärseite, müssen diese exakt zueinander positioniert werden. Es ist also kein freies Positionieren möglich. Um ein freies Positionieren zu ermöglichen, können primär- und/oder sekundärseitig mehrere Spulen verwendet werden und das Spulenpaar mit dem größten Koppelfaktor zur Energieübertragung genutzt werden.

Dabei ist zu beachten, dass sich metallische Gegenstände, die sich zwischen den Spulen befinden, erhitzen können.

Es können daher Metallobjekterkennungssysteme genutzt werden, die metallische Objekte erkennen und ein Laden unterbinden, wenn ein solches Objekt erkannt wurde.

### Offenbarung der Erfindung

Die vorliegende Erfindung offenbart eine Energieübertragungsvorrichtung mit den Merkmalen des Patentanspruchs 1 und ein Energieübertragungsverfahren mit den Merkmalen des Patentanspruchs 6.

Demgemäß ist vorgesehen:
Eine Energieübertragungsvorrichtung zum kontaktlosen Übertragen von elektrischer Energie, mit einer Mehrzahl von Sendespulen und einer Mehrzahl von Empfängerspulen, und mit einer Steuervorrichtung, welche ausgebildet ist, in einem Energieübertragungsmodus eine vorgegebene Anzahl der Sendespulen sequentiell anzusteuern.

Ferner ist vorgesehen:
Ein Energieübertragungsverfahren zum kontaktlosen Übertragen von elektrischer Energie, aufweisend Bereitstellen einer Mehrzahl von Sendespulen und einer Mehrzahl von Empfängerspulen, und in einem Energieübertragungsmodus sequentielles Ansteuern einer vorgegebenen Anzahl der Sendespulen.

### Vorteile der Erfindung

Die Energieübertragungsvorrichtung gemäß der vorliegenden Erfindung kann z.B. zum Laden von mobilen Geräten, wie z.B. Mobiltelefonen, Tablet-PCs oder dergleichen, genutzt werden. Die Energieübertragungsvorrichtung kann aber z.B. auch zum induktiven Laden von Fahrzeugen oder dergleichen genutzt werden.

Als Sendespulen werden bei der Energieübertragungsvorrichtung diejenigen Spulen verstanden, die auf der Primärseite bzw. der Seite der Energiequelle, also z.B. dem elektrischen Versorgungsnetz bzw. einer Steckdose, angeordnet sind. Die Empfängerspulen bezeichnen bei der Energieübertragungsvorrichtung diejenigen Spulen, die auf der Seite des Empfängers, also der Sekundärseite, angeordnet sind. Die Sendespulen senden folglich elektrische Energie, z.B. in Form elektromagnetischer Felder aus. Die Empfängerspulen nehmen diese elektrische Energie auf und leiten sie an das jeweilige Gerät weiter.

Beim Ansteuern im Energieübertragungsmodus kann die Steuervorrichtung die Sendespulen z.B. mit einem Wechselstrom bzw. einer Wechselspannung beaufschlagen, so dass diese die gewünschten elektromagnetischen Felder ausbilden. Auf Empfängerseite können die einzelnen Empfängerspulen z.B. mit einem Gleichrichter gekoppelt sein, so dass ein gleichgerichteter Strom bzw. eine gleichgerichtete Spannung zur Verfügung steht, welche im Empfänger z.B. zum Laden von Batterien genutzt werden kann.

Die Mehrzahl von Sendespulen und die Mehrzahl von Empfängerspulen bilden auf Sendeseite und Empfängerseite jeweils ein sog. Multi-Coil Spulensystem. Solche Systeme ermöglichen eine freie Positionierung der Sendespulen gegenüber den Empfängerspulen. Je nach Position des Sender Multi-Coil Spulensystems zu dem Empfänger Multi-Coil Spulensystem entstehen folglich unterschiedliche Spulenpaare.

Bei bekannten Systemen wird ein einzelnes Spulenpaar, das mit dem größten Koppelfaktor, in einem Quasi-Dauerbetrieb angesteuert. Die einzelnen Spulen werden also über eine Zeitdauer von üblicherweise mehreren Sekunden mit voller Leistung betrieben. Befinden sich metallische Gegenstände zwischen den Spulen können diese sich, wie oben bereits erläutert, erhitzen.

Bei der vorliegenden Erfindung dagegen werden die einzelnen Spulen nicht in einem Quasi-Dauerbetrieb angesteuert. Vielmehr wird eine Anzahl von Spulenpaaren ausgewählt, und diese sequentiell, also im Wechsel bzw. nacheinander, angesteuert. Jede einzelne Spule wird folglich nur für einen kurzen Zeitraum angesteuert, in Summe wird aber permanent elektrische Energie zwischen den Sendespulen und den Empfängerspulen übertragen.

Da aber die elektrische Energie immer durch andere Spulenpaare und damit an unterschiedlichen Orten übertragen wird, erhitzt sich ein metallisches Objekt nur geringfügig, wenn es zwischen einem der Spulenpaare liegt.

Die vorliegende Erfindung ermöglicht folglich eine Energieübertragungsvorrichtung ohne eine Metallobjekterkennung bereitzustellen und erlaubt gleichzeitig eine freie Positionierung der Sendespulen gegenüber den Empfängerspulen.

Vorteilhafte Ausführungsformen und Weiterbildungen ergeben sich aus den Unteransprüchen sowie aus der Beschreibung unter Bezugnahme auf die Figuren.

In einer Ausführungsform kann die Steuervorrichtung ausgebildet sein, in einem Identifikationsmodus für jede der Sendespulen jeweils den Koppelfaktor mit den einzelnen Empfängerspulen zu identifizieren und die im Energieübertragungsmodus angesteuerten Sendespulen ausgehend von dem Spulenpaar aus Sendespule und Empfängerspule mit dem größten Koppelfaktor dem Koppelfaktor nach auszuwählen. Es werden also nicht beliebige Spulenpaare für die Energieübertragung ausgewählt. Vielmehr werden diejenigen Spulenpaare mit den größten Koppelfaktoren für die Energieübertragung ausgewählt, wodurch die Effizienz der Energieübertragung maximiert wird.

Die Steuervorrichtung ist erfindungsgemäß ausgebildet, beim sequentiellen Ansteuern der Sendespulen jeweils diejenige Sendespule als nächstes anzusteuern, welche den größten Abstand zu der zuletzt angesteuerten Sendespule aufweist. Es werden dabei z.B. in jedem Zyklus alle ausgewählten Sendespulen genau einmal angesteuert und dann der Zyklus wiederholt. Die Reihenfolge, in welcher die Sendespulen angesteuert werden, bestimmt sich dabei aus dem oben erwähnten Abstand. Sollte sich ein metallischer Gegenstand zwischen den Spulen befinden, wird so sichergestellt, dass dieser lokal an möglichst weit auseinanderliegenden Stellen erwärmt wird. Durch das Umschalten zwischen den Sendespulen, also das sequentielle Ansteuern, wird folglich lediglich wenig Hitze in dem Gegenstand erzeugt.

Selbstverständlich kann auch eine andere Reihenfolge bei der Ansteuerung der einzelnen Sendespulen gewählt werden. Beispielsweise kann der gemittelte Abstand zwischen den Sendespulen maximiert werden. Dazu kann z.B. jede mögliche Reihenfolge für das Ansteuern der Sendespulen untersucht werden.

Selbstverständlich kann auch eine andere Reihenfolge bei der Ansteuerung der einzelnen Sendespulen gewählt werden. Beispielsweise kann der gemittelte Abstand zwischen den Sendespulen maximiert werden. Dazu kann z.B. jede mögliche Reihenfolge für das Ansteuern der Sendespulen untersucht werden.

In einer Ausführungsform kann die Steuervorrichtung ausgebildet sein, beim sequentiellen Ansteuern der Sendespulen jede der Sendespulen für eine Dauer von weniger als einer Sekunde, insbesondere weniger als 500 Millisekunden, weniger als 250 Millisekunden oder weniger als 100 Millisekunden anzusteuern. Je länger ein metallisches Objekt (falls vorhanden) den elektromagnetischen Feldern einer der Sendespulen ausgesetzt ist, desto stärker erhitzt es sich. Die Zeitdauer des Ansteuerns jeder einzelnen Spule beeinflusst, neben dem Strom in der Spule, also die Wärme, welche in einem metallischen Objekt lokal über der Sendespule erzeugt wird. Durch die genannten Zeiträume kann je nach Anwendung gewählt werden, wie schnell die Steuervorrichtung zwischen den Spulen umschaltet.

Zusätzlich oder alternativ kann die Recheneinrichtung die Zeitdauer auch dynamisch basierend auf dem Abstand der nacheinander angesteuerten Spulen bestimmen, wobei die Zeitdauer größer wird, wenn der Abstand größer ist.

In einer weiteren zusätzlichen oder alternativen Ausführungsform kann ein maximaler Betrag für den Strom vorgegeben werden, mit welchem die einzelnen Sendespulen betrieben werden. Die Zeitdauer und der maximale Betrag für diesen Strom können dann basierend auf einem Grenzwert für einen maximalen Energieeintrag in ein eventuell über der jeweiligen Sendespule liegendes metallisches Objekt gewählt werden.

Bei einer Spule mit hohem Koppelfaktor wird bei gleichem Strom mehr elektrische Energie auf die Sekundärseite übertragen, als bei einer Spule mit niedrigem Koppelfaktor. Der Strom, mit welchem die einzelnen Sendespulen betrieben werden, kann daher z.B. für jede Sendespule entsprechend ihrem Koppelfaktor derart maximiert werden, dass der Grenzwert für den maximalen Energieeintrag nicht überschritten wird. Die Zeitdauer für das Ansteuern der einzelnen Sendespulen kann ebenfalls variiert werden, sodass der gemittelte Energieeintrag in ein metallisches Objekt den vorgegeben Grenzwert nicht überschreitet.

In einer Ausführungsform kann die Energieübertragungsvorrichtung eine Wechselstrom- bzw. Wechselspannungsquelle aufweisen, welche ausgebildet ist, einen Wechselstrom- bzw. eine Wechselspannung zum Ansteuern der Sendespulen zu erzeugen, und einen Umschalter, welcher ausgebildet ist, die Wechselstrom- bzw. Wechselspannungsquelle steuerbar mit einer der Spulen elektrisch zu koppeln. Die Steuervorrichtung kann ausgebildet sein, den Umschalter anzusteuern, um jeweils eine der Sendespulen anzusteuern. Es kann also mit einer Quelle eine Vielzahl von Sendespulen angesteuert werden. Es können z.B. auch zwei Quellen vorhanden sein bzw. der Umschalter kann die Wechselstrom- bzw. Wechselspannungsquelle gleichzeitigt mit zwei der Sendespulen koppeln. Sind mehr als zwei Sendespulen verfügbar, können z.B. auch zwei Spulen gleichzeitigt genutzt werden, um elektrische Energie zu übertragen. Vor der Verwendung von zwei Spulenpaaren kann z.B. auch geprüft werden, ob der Abstand zwischen den jeweiligen Spulenpaaren groß genug (größer als ein vorgegebener Schwellwert) ist.

In einer Ausführungsform kann die vorgegebene Anzahl dynamisch basierend auf einem Grenzwert für den Koppelfaktor zwischen der jeweiligen Sendespule mit einer der Empfängerspulen bestimmt werden. Es werden also alle diejenigen Spulenpaare sequentiell angesteuert, deren Koppelfaktoren über dem vorgegebenen Grenzwert liegen. Anstelle einer festen Anzahl von z.B. 2, 3, 4, 5, 6 oder mehr Sendespulen, wird also dynamisch bestimmt, wie viele Sendespulen genutzt werden. Sind z.B. 10 Sendespulen und 10 Empfängerspulen vorhanden, und liegen diese jeweils paarweise direkt übereinander, haben also einen hohen Koppelfaktor, können auch alle 10 Spulenpaare für die Energieübertragung genutzt werden.

Selbstverständlich kann auch eine Mindestanzahl an Spulenpaaren vorgegeben werden, die mindesten für die Energieübertragung genutzt werden. Beispielsweise kann vorgegeben werden, dass immer mindestens zwei Spulenpaare für die Energieübertragung genutzt werden müssen, auch wenn deren Koppelfaktor unter dem Grenzwert liegt.

Für den Fall, dass keine zwei Spulen mit einem ausreichenden Koppelfaktor (z.B. einem vorgegebenen minimalen Koppelfaktor) gefunden werden, kann z.B. angezeigt werden, dass die Empfängerspulen gegenüber den Sendespulen neu positioniert werden müssen.

In einer Ausführungsform kann die Steuervorrichtung ausgebildet sein, den Koppelfaktor sender- bzw. primärseitig für die einzelnen Sendespulen zu bestimmen, indem sie nacheinander jede der Sendespulen mit einem vorgegebenen Strom, insbesondere einem Wechselstrom, bestromt und den resultierenden Strom an jeder der Empfängerspulen misst. Der Strom beim Messen des Koppelfaktors kann insbesondere geringer sein, als der Strom bei der Energieübertragung. Der Koppelfaktor muss dabei nicht exakt bestimmt werden. Vielmehr genügt es, den Koppelfaktor qualitativ zu bestimmen. Es genügt also, festzustellen, an welchen Empfängerspulen jeweils der größte Strom gemessen wird. Sind die Sende- und Empfängerspulen identisch, weisen sie also insbesondere die gleiche Induktivität auf, kann der Koppelfaktor dennoch näherungsweise als das Verhältnis von Strom in der Empfängerspule zu Strom in der Sendespule berechnet werden. Bei unterschiedlichen Induktivitäten der Sende- und Empfängerspulen können die unterschiedlichen Induktivitäten bei der Berechnung ebenfalls berücksichtigt werden.

In einer Ausführungsform kann die Steuervorrichtung ausgebildet sein, den Koppelfaktor sender- bzw. primärseitig für die einzelnen Sendespulen zu bestimmen, indem sie die Induktivität der Sendespulen bei offenen Empfängerspulen und bei kurzgeschlossenen Empfängerspulen misst. Dazu kann die Steuervorrichtung empfänger- bzw. sekundärseitig eine Schaltvorrichtung aufweisen, welche ausgebildet ist, die Empfängerspulen einzeln oder gleichzeitig zu öffnen, also deren Kontakte nicht mit weiteren Elementen zu koppeln, und die Empfängerspulen kurzzuschließen. Der Koppelfaktor kann dann als die Wurzel aus eins minus dem Verhältnis der Induktivitäten (Kurzschluss / offen) der jeweiligen Sendespule bestimmt werden. Die Induktivität kann dabei z.B. jeweils basierend auf einer Messung der Resonanzfrequenz eines Schwingkreises mit bekannter Kapazität bestimmt werden.

In einer Ausführungsform kann die Steuervorrichtung zwei einzelne Recheneinrichtungen, z.B. Controller, aufweisen. Eine der Recheneinrichtungen kann dabei z.B. auf der Primärseite und eine der Recheneinrichtungen auf der Sekundärseite angeordnet sein. Die Recheneinrichtungen können z.B. über eine drahtlose Kommunikationsschnittstelle miteinander in kommunikativer Verbindung stehen. Die sekundärseitige Recheneinrichtung kann so der primärseitigen Recheneinrichtung z.B. mitteilen, an welcher Empfängerspule und zu welchem Zeitpunkt der größte Strom gemessen wurde und/oder wie groß der gemessene Strom ist. Ferner kann die primärseitige Recheneinrichtung der sekundärseitigen Recheneinrichtung z.B. mitteilen, wann und welche der Empfängerspulen geöffnet oder kurzgeschlossen werden sollen und über welche Spulenpaare letztendlich die Energieübertragung durchgeführt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Energieübertragungsvorrichtung;
- Fig. 2: ein Blockschaltbild einer weiteren Ausführungsform einer erfindungsgemäßen Energieübertragungsvorrichtung;
- Fig. 3: ein Ablaufdiagramm einer Ausführungsform eines erfindungsgemäßen Energieübertragungsverfahren; und
- Fig. 4: ein Diagramm zur Veranschaulichung der Ansteuerung von Sendespulen einer Ausführungsform einer erfindungsgemäßen Energieübertragungsvorrichtung.

In allen Figuren sind gleiche bzw. funktionsgleiche Elemente und Vorrichtungen - sofern nichts anderes angegeben ist - mit denselben Bezugszeichen versehen worden.

### Ausführungsformen der Erfindung

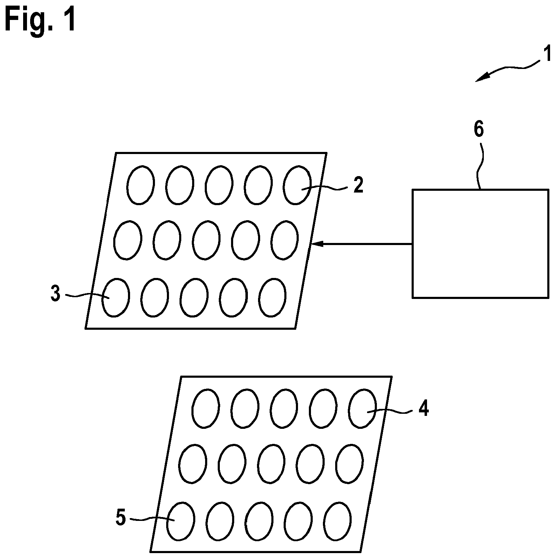

Fig. 1 zeigt eine Energieübertragungsvorrichtung 1 zum kontaktlosen Übertragen von elektrischer Energie, beispielsweise zum Laden von Batterien in einem elektronischen Gerät.

Die Energieübertragungsvorrichtung 1 weist primärseitig, also auf Senderseite, 15 Sendespulen 2, 3 auf. Lediglich die erste und die letzte Sendespule 2, 3 sind der Übersichtlichkeit halber mit Bezugszeichen versehen. Die Sendespulen sind in einer 3x5 Matrix, drei Reihen und fünf Spalten, von Sendespulen 2, 3 angeordnet. Es versteht sich, dass diese Anordnung lediglich beispielhaft ist. Selbstverständlich kann je nach Anwendung eine andere Anzahl an Sendespulen 2, 3 bzw. eine andere Anordnung der Sendespulen 2, 3 gewählt werden. Analog zu der Anordnung der Sendespulen 2, 3 sind 15 Empfängerspulen 4, 5 empfänger- bzw. sekundärseitig dargestellt. Auch hier sind der Übersichtlichkeit halber lediglich die erste und die zweite Empfängerspule 4, 5 mit Bezugszeichen versehen.

Ferner ist eine Steuervorrichtung 6 dargestellt, die mit den Sendespulen 2, 3 gekoppelt ist, um diese in einem Energieübertragungsmodus anzusteuern bzw. mit einem Wechselstrom bzw. einer Wechselspannung zu beaufschlagen. Die Steuervorrichtung 6 steuert aber nicht alle oder zufällig ausgewählte Sendespulen 2, 3 an. Vielmehr steuert die Steuervorrichtung 6 eine vorgegebene Anzahl an Sendespulen 2, 3 sequentiell, also nacheinander, an. Dies führt dazu, dass permanent elektrische Leistung zwischen den Sendespulen 2, 3 und den Empfängerspulen 4, 5 übertragen wird. Gleichzeitig wird der Ort, an welchem die elektrische Energie übertragen wird kontinuierlich geändert. Befindet sich ein metallischer Gegenstand zwischen den Sendespulen 2, 3 und den Empfängerspulen 4, 5 wird dieser folglich nur lokal und für kurze Zeit erwärmt, bis die nächste Sendespule 2, 3 angesteuert wird.

Insbesondere bei mobilen Geräten, wie z.B. Smartphones, kann es vorkommen, dass diese nicht exakt über den Sendespulen 2, 3 positioniert werden und damit die Sendespulen 2, 3 und die Empfängerspulen 4, 5 auch nicht exakt übereinander liegen. Es kann also sein, dass Sendespulen 2, 3 und Empfängerspulen 4, 5 stark miteinander gekoppelt sind, die in der geometrischen Matrix-Anordnung der Spulen nicht an der gleichen Stelle liegen.

Um die Energieübertragung möglichst effizient zu gestalten, kann in einem Identifikationsmodus die Steuervorrichtung 6 für jede der Sendespulen 2, 3 einen Koppelfaktor mit einer der Empfängerspulen 4, 5 bestimmen. Die Steuervorrichtung 6 kann dann für die Energieübertragung die Sendespulen 2, 3 mit dem größten Koppelfaktor nutzen. Die Anzahl der zu nutzenden Sendespulen 2, 3 kann dabei z.B. vorgegeben sein. Beispielsweise kann in einer Anwendung vorgegeben sein, dass die vier Sendespulen 2, 3 mit den vier größten Koppelfaktoren für die Energieübertragung genutzt werden sollen. Alternativ kann die Anzahl an zu nutzenden Sendespulen 2, 3 individuell bestimmt werden. Beispielsweise kann vorgegeben werden, dass alle Sendespulen 2, 3 genutzt werden sollen, deren Koppelfaktor über einem vorgegebenen Schwellwert liegt. Als Koppelfaktor kann auch jede Größe behandelt werden, die eine qualitative Aussage über den tatsächlichen Koppelfaktor erlaubt. Beispielsweise kann ein an einer Empfängerspule 4, 5 gemessener Strom als den Koppelfaktor kennzeichnen, wenn der Strom in der Sendespule 2, 3 bekannt ist.

Um den lokalen Energieeintrag in einem metallischen Gegenstand und damit dessen Erhitzung möglichst gering zu halten, kann die Steuereinrichtung 6 beim sequentiellen Ansteuern der Sendespulen 2, 3 jeweils diejenige Sendespule 2, 3 als nächstes ansteuern, welche den größten Abstand zu der zuletzt angesteuerten Sendespule 2, 3 aufweist. Es versteht sich, dass damit nicht das hin und herspringen zwischen den zwei am weitesten voneinander entfernt liegenden Sendespulen 2, 3 gemeint ist, wenn mehr als zwei Sendespulen 2, 3 für die Energieübertragung zur Verfügung stehen. Vielmehr kann die Recheneinrichtung 6 eine Reihenfolge für das Ansteuern der Sendespulen 2, 3 bestimmen, so dass die direkt nacheinander angesteuerten Sendespulen 2, 3 möglichst weit auseinander liegen oder der gemittelte Abstand zwischen den nacheinander angesteuerten Sendespulen 2, 3 maximiert wird. Die Steuervorrichtung 6 kann dabei jede der Sendespulen 2, 3 für eine vorgegebene Zeitdauer, von z.B. weniger als 1s oder als 500ms, weniger als 250ms oder weniger als 100ms ansteuern.

Alternativ kann die Recheneinrichtung 6 die Zeitdauer auch dynamisch basierend auf dem Abstand der nacheinander angesteuerten Spulen bestimmen, wobei die Zeitdauer größer wird, wenn der Abstand größer ist.

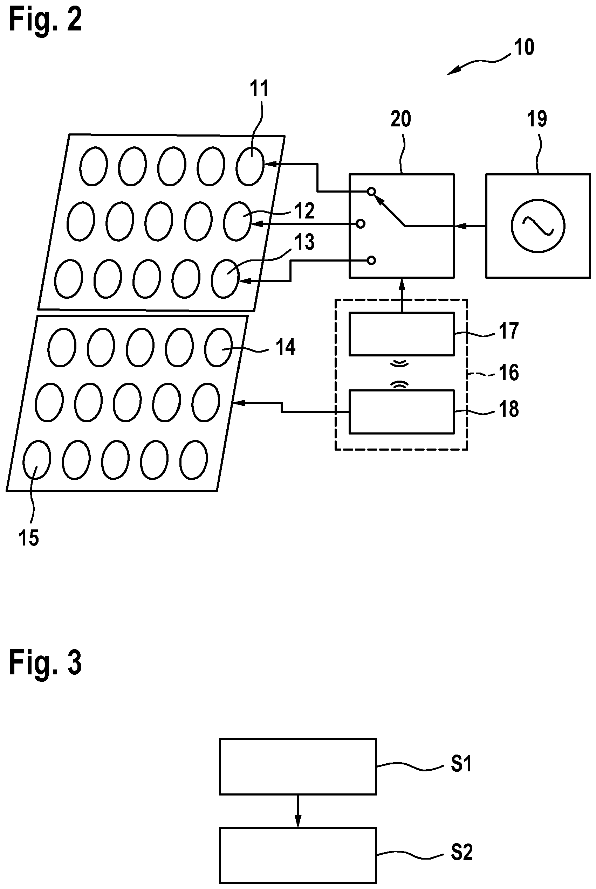

Fig. 2 zeigt eine erfindungsgemäße Energieübertragungsvorrichtung 10, die auf der Energieübertragungsvorrichtung 1 basiert. Zusätzlich zu den 15 Sendespulen, drei davon sind mit 11, 12, 13 bezeichnet, und den Empfängerspulen 14, 15, weist die Energieübertragungsvorrichtung 10 eine Wechselstrom 19 und einen Umschalter 20 auf. Die Wechselstromquelle 19 kann z.B. ein Inverter oder Wechselrichter sein. Die Wechselstromquelle 19 kann aber z.B. auch ein Transformator sein, der eine Netzspannung auf die nötige Spannung transformiert und einen entsprechenden Stromregler aufweist.

Ferner ist die Steuervorrichtung 16 zweigeteilt. Dabei ist eine Recheneinrichtung 17 sende- bzw. primärseitig angeordnet. Eine zweite Recheneinrichtung 18 ist empfänger- bzw. sekundärseitig angeordnet. Die zwei Recheneinrichtungen 17 und 18 können drahtlos miteinander kommunizieren. Dazu kann z.B. den Wechselstrom, mit welcher die Sendespulen 11, 12, 13 angesteuert werden, moduliert werden. Alternativ kann eine separate Kommunikationsschnittstelle, z.B. NFC, Bluetooth, WLAN oder dergleichen vorgesehen sein.

Die Recheneinrichtung 17 steuert den Umschalter 20 an, so dass jeweils die gewünschte Sendespule 11, 12, 13 mit elektrischer Energie, hier also der Wechselstrom der Quelle 19, versorgt wird. Der Umschalter 20 ist lediglich schematisch mit drei der Sendespulen 11, 12, 13 gekoppelt. Es versteht sich, dass der Umschalter 20 ausgebildet ist, alle Sendespulen 11, 12, 13 anzusteuern. Ferner kann der Umschalter 20 auch ausgebildet sein, mehrere Sendespulen 11, 12, 13 gleichzeitig anzusteuern. Beispielsweise könnten die vier Sendespulen an den Ecken der Matrix einen hohen Koppelfaktor aufweisen. In solch einem Fall könnten jeweils die zwei sich gegenüberliegenden Sendespulen gleichzeitig angesteuert werden.

Die Recheneinrichtungen 17 kann den Koppelfaktor sender- bzw. primärseitig für die einzelnen Sendespulen 11, 12,13 z.B. bestimmen, indem sie die Sendespulen 11, 12, 13 mit einem vorgegeben Strom, insbesondere einem Wechselstrom, bestromt. Gleichzeitig kann die Recheneinrichtungen 18 empfänger- bzw. sekundärseitig jeweils den Strom in den einzelnen Empfängerspulen 14, 15 messen und diese Information an die Recheneinrichtung 17 übertragen. Diese kann anhand des Betrags des Stroms dann das Spulenpaar bzw. die Spulenpaare mit der größten Kopplung identifizieren. Alternativ kann die Recheneinrichtung 18 auch lediglich die Information über den Betrag des Koppelfaktors für die jeweilige Sendespule 11, 12, 13 übertragen. Der Koppelfaktor kann, wie oben beschrieben, z.B. basierend auf einer sekundärseitigen Strommessung lediglich qualitativ bestimmt werden. Eine solche qualitative Bestimmung ist ausreichen, um diejenigen Sendespulen 11, 12, 13 zu identifizieren, welche für die Energieübertragung genutzt werden sollen. Bei der qualitativen Bestimmung kann z.B. der Betrag des Stroms in den Empfängerspulen 14, 15 als Vergleichsgröße genutzt werden.

Die Recheneinrichtungen 17 kann alternativ den Koppelfaktor sender- bzw. primärseitig für die einzelnen Sendespulen 11, 12,13 z.B. bestimmen, indem sie die Induktivität der Sendespulen 11, 12, 13 bei offenen Empfängerspulen 14, 15 und bei kurzgeschlossenen Empfängerspulen 14, 15 misst. Dazu kann die Recheneinrichtungen 18 empfänger- bzw. sekundärseitig eine Schaltvorrichtung aufweisen, welche ausgebildet ist, die Empfängerspulen 14, 15 einzeln oder gleichzeitig zu öffnen bzw. kurzzuschließen. Der Koppelfaktor kann dann als die Wurzel aus eins minus dem Verhältnis der Induktivitäten (Kurzschluss / offen) der jeweiligen Sendespule 11, 12, 13 bestimmt werden. Die Recheneinrichtungen 17 kann die Induktivität z.B. jeweils basierend auf einer Messung der Resonanzfrequenz eines Schwingkreises mit bekannter Kapazität bestimmen.

Fig. 3 zeigt ein Ablaufdiagramm eines Energieübertragungsverfahrens zum kontaktlosen Übertragen von elektrischer Energie.

Das Verfahren sieht das Bereitstellen S1 einer Mehrzahl von Sendespulen 2, 3, 11, 12, 13, 30, 31, 32 und einer Mehrzahl von Empfängerspulen 4, 5, 14, 15 vor. Ferner wird in einem Energieübertragungsmodus eine vorgegebene Anzahl der Sendespulen 2, 3, 11, 12, 13, 30, 31, 32 sequentiell angesteuert S2.

Beim Ansteuern der Sendespulen 2, 3, 11, 12, 13, 30, 31, 32 kann ein Wechselstrom bzw. eine Wechselspannung erzeugt werden und zyklisch bzw. sequentiell jeweils an der entsprechenden der Sendespule 2, 3, 11, 12, 13, 30, 31, 32 bereitgestellt werden. Die Anzahl der anzusteuernden Sendespulen 2, 3, 11, 12, 13, 30, 31, 32 kann dabei z.B. dynamisch basierend auf einem Grenzwert für den Koppelfaktor zwischen der jeweiligen Sendespule 2, 3, 11, 12, 13, 30, 31, 32 mit einer der Empfängerspulen bestimmt werden.

Um die Sendespulen 2, 3, 11, 12, 13, 30, 31, 32 zu identifizieren, die zur Energieübertragung genutzt werden sollen, kann in einem Identifikationsmodus für jede der Sendespulen 2, 3, 11, 12, 13, 30, 31, 32 jeweils deren Koppelfaktor mit einer der Empfängerspulen 4, 5, 14, 15 identifiziert werden. In dem Energieübertragungsmodus können dann die anzusteuernden Sendespulen 2, 3, 11, 12, 13, 30, 31, 32 ausgehend von der Spule mit dem größten Koppelfaktor dem Koppelfaktor nach ausgewählt werden.

Der lokale Energieeintrag und damit die lokale Erhitzung eines metallischen Gegenstands kann minimiert werden, wenn beim sequentiellen Ansteuern der Sendespulen 2, 3, 11, 12, 13, 30, 31, 32 jeweils diejenige Sendespule 2, 3, 11, 12, 13, 30, 31, 32 als nächstes angesteuert wird, welche den größten Abstand zu der zuletzt angesteuerten Sendespule 2, 3, 11, 12, 13, 30, 31, 32 aufweist. Beim sequentiellen Ansteuern der Sendespulen 2, 3, 11, 12, 13, 30, 31, 32 können diese jeweils für eine Dauer von weniger als einer Sekunde, insbesondere weniger als 500 Millisekunden, weniger als 250 Millisekunden oder weniger als 100 Millisekunden angesteuert werden.

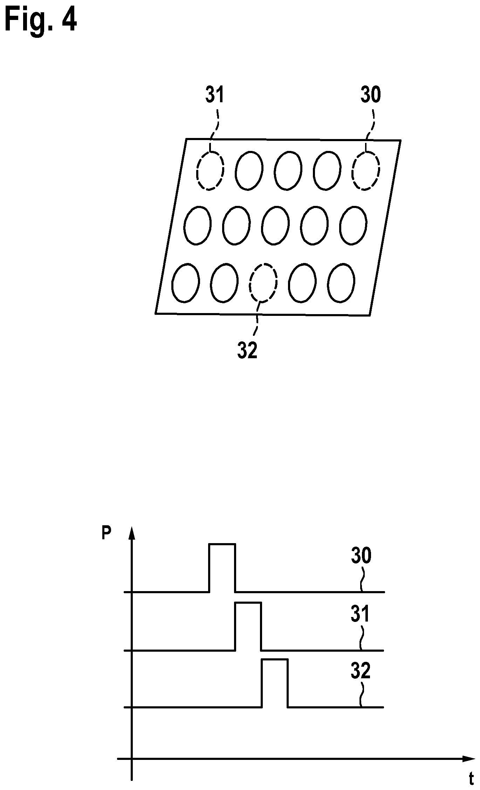

Fig. 4 zeigt ein Diagramm zur Veranschaulichung der Ansteuerung von Sendespulen 30, 31, 32. Die Sendespulen 30, 31, 32 sind in einer Matrix mit 15 Sendespulen angeordnet, wie sie in Figs. 1 und 2 auch gezeigt sind. Sendespulen 30, 31, 32 sind gestrichelt dargestellt und kennzeichnen die drei Sendespulen 30, 31, 32 mit dem größten Koppelfaktor zu entsprechenden Empfängerspulen.

In dem Diagramm neben den Sendespulen 30, 31, 32 ist dargestellt, wie die einzelnen Sendespulen 30, 31, 32 angesteuert werden. Es ist zu erkennen, dass jeweils nur eine der Sendespulen 30, 31, 32 gleichzeitig angesteuert wird. Zuerst wird die Sendespule 30 angesteuert, anschließend die Sendespule 31 und zuletzt die Sendespule 32. Diese Sequenz wird während des gesamten Ladevorgangs kontinuierlich wiederholt.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar.

## Patentansprüche

1. Energieübertragungsvorrichtung (1, 10) zum kontaktlosen Übertragen von elektrischer Energie,
mit einer Mehrzahl von Sendespulen (2, 3, 11, 12, 13, 30, 31, 32) und einer Mehrzahl von Empfängerspulen (4, 5, 14, 15), und
mit einer Steuervorrichtung (6, 16), welche ausgebildet ist, in einem Energieübertragungsmodus eine vorgegebene Anzahl der Sendespulen (2, 3, 11, 12, 13, 30, 31, 32) sequentiell anzusteuern,
**dadurch gekennzeichnet, dass** die Steuervorrichtung (6, 16) ausgebildet ist, beim sequentiellen Ansteuern der Sendespulen (2, 3, 11, 12, 13, 30, 31, 32) jeweils diejenige Sendespule (2, 3, 11, 12, 13, 30, 31, 32) als nächstes anzusteuern, welche den größten Abstand zu der zuletzt angesteuerten Sendespule (2, 3, 11, 12, 13, 30, 31, 32) aufweist.

2. Energieübertragungsvorrichtung (1, 10) nach Anspruch 1, wobei die Steuervorrichtung (6, 16) ausgebildet ist, in einem Identifikationsmodus für jede der Sendespulen (2, 3, 11, 12, 13, 30, 31, 32) jeweils den Koppelfaktor mit den einzelnen Empfängerspulen (4, 5, 14, 15) zu identifizieren und die im Energieübertragungsmodus angesteuerten Sendespulen (2, 3, 11, 12, 13, 30, 31, 32) ausgehend von dem Spulenpaar mit dem größten Koppelfaktor dem Koppelfaktor nach auszuwählen.

3. Energieübertragungsvorrichtung (1, 10) nach einem der vorherigen Ansprüche, wobei die Steuervorrichtung (6, 16) ausgebildet ist, beim sequentiellen Ansteuern der Sendespulen (2, 3, 11, 12, 13, 30, 31, 32) jede der Sendespulen (2, 3, 11, 12, 13, 30, 31, 32) für eine Dauer von weniger als einer Sekunde, insbesondere weniger als 500 Millisekunden, weniger als 250 Millisekunden oder weniger als 100 Millisekunden anzusteuern.

4. Energieübertragungsvorrichtung (1, 10) nach einem der vorherigen Ansprüche, aufweisend eine Wechselstromquelle (19), welche ausgebildet ist, einen Wechselstrom zum Ansteuern der Sendespulen (2, 3, 11, 12, 13, 30, 31, 32) zu erzeugen, und einen Umschalter (20), welcher ausgebildet ist, die Wechselstromquelle (19) steuerbar mit einer der Spulen elektrisch zu koppeln,
wobei die Steuervorrichtung (6, 16) ausgebildet ist, den Umschalter (20) anzusteuern, um jeweils eine der Sendespulen (2, 3, 11, 12, 13, 30, 31, 32) anzusteuern.

5. Energieübertragungsvorrichtung (1, 10) nach einem der vorherigen Ansprüche, wobei die Steuervorrichtung (6, 16) ausgebildet ist, die vorgegebene Anzahl dynamisch basierend auf einem Grenzwert für den Koppelfaktor zwischen der jeweiligen Sendespule (2, 3, 11, 12, 13, 30, 31, 32) mit einer der Empfängerspulen zu bestimmen, wobei die Steuervorrichtung (6, 16) ausgebildet ist, nur diejenigen Spulenpaare sequentiell anzusteuern, deren Koppelfaktoren über dem vorgegebenen Grenzwert liegen.

6. Energieübertragungsverfahren zum kontaktlosen Übertragen von elektrischer Energie, aufweisend:
Bereitstellen (S1) einer Mehrzahl von Sendespulen (2, 3, 11, 12, 13, 30, 31, 32) und einer Mehrzahl von Empfängerspulen (4, 5, 14, 15), und
in einem Energieübertragungsmodus sequentielles Ansteuern (S2) einer vorgegebenen Anzahl der Sendespulen (2, 3, 11, 12, 13, 30, 31, 32),
**dadurch gekennzeichnet, dass** beim sequentiellen Ansteuern der Sendespulen (2, 3, 11, 12, 13, 30, 31, 32) jeweils diejenige Sendespule (2, 3, 11, 12, 13, 30, 31, 32) als nächstes angesteuert wird, welche den größten Abstand zu der zuletzt angesteuerten Sendespule (2, 3, 11, 12, 13, 30, 31, 32) aufweist.

7. Energieübertragungsverfahren nach Anspruch 6, wobei in einem Identifikationsmodus für jede der Sendespulen (2, 3, 11, 12, 13, 30, 31, 32) jeweils der Koppelfaktor mit den einzelnen Empfängerspulen (4, 5, 14, 15) identifiziert wird, und
die im Energieübertragungsmodus angesteuerten Sendespulen (2, 3, 11, 12, 13, 30, 31, 32) ausgehend von dem Spulenpaar mit dem größten Koppelfaktor dem Koppelfaktor nach ausgewählt werden.

8. Energieübertragungsverfahren nach einem der vorherigen Ansprüche 6 oder 7, wobei beim sequentiellen Ansteuern der Sendespulen (2, 3, 11, 12, 13, 30, 31, 32) jede der Sendespulen (2, 3, 11, 12, 13, 30, 31, 32) für eine Dauer von weniger als einer Sekunde, insbesondere weniger als 500 Millisekunden, weniger als 250 Millisekunden oder weniger als 100 Millisekunden angesteuert wird.

9. Energieübertragungsverfahren nach einem der vorherigen Ansprüche 6 bis 8, aufweisend Erzeugen eines Wechselstroms zum Ansteuern der Sendespulen (2, 3, 11, 12, 13, 30, 31, 32), und jeweils elektrisch Koppeln des Wechselstroms mit der entsprechenden der Sendespulen (2, 3, 11, 12, 13, 30, 31, 32).

10. Energieübertragungsverfahren nach einem der vorherigen Ansprüche 6 bis 9, wobei die vorgegebene Anzahl dynamisch basierend auf einem Grenzwert für den Koppelfaktor zwischen der jeweiligen Sendespule (2, 3, 11, 12, 13, 30, 31, 32) mit einer der Empfängerspulen bestimmt wird, wobei nur diejenigen Spulenpaare sequentiell angesteuert werden, deren Koppelfaktoren über dem vorgegebenen Grenzwert liegen.

## Claims

1. Energy transmission device (1, 10) for the contactless transmission of electrical energy, comprising a plurality of transmitting coils (2, 3, 11, 12, 13, 30, 31, 32) and a plurality of receiving coils (4, 5, 14, 15), and
comprising a control device (6, 16) which is configured to activate a predetermined number of the transmitting coils (2, 3, 11, 12, 13, 30, 31, 32) sequentially in an energy transmission mode,
**characterized in that**, in the case of sequential activation of the transmitting coils (2, 3, 11, 12, 13, 30, 31, 32), the control device (6, 16) is configured to activate next the respective transmitting coil (2, 3, 11, 12, 13, 30, 31, 32) which has the greatest spacing from the last-activated transmitting coil (2, 3, 11, 12, 13, 30, 31, 32).

2. Energy transmission device (1, 10) according to Claim 1, wherein the control device (6, 16) is configured to identify the respective coupling factor to the individual receiving coils (4, 5, 14, 15) for each of the transmitting coils (2, 3, 11, 12, 13, 30, 31, 32) in an identification mode, and to select, according to the coupling factor, the transmitting coils (2, 3, 11, 12, 13, 30, 31, 32) which are activated in the energy transmission mode, based on the coil pair having the greatest coupling factor.

3. Energy transmission device (1, 10) according to either of the previous claims, wherein, in the case of sequential activation of the transmitting coils (2, 3, 11, 12, 13, 30, 31, 32), the control device (6, 16) is configured to activate each of the transmitting coils (2, 3, 11, 12, 13, 30, 31, 32) for a period of less than one second, in particular less than 500 milliseconds, less than 250 milliseconds, or less than 100 milliseconds.

4. Energy transmission device (1, 10) according to one of the previous claims, comprising an alternating-current source (19) which is configured to generate an alternating current for activating the transmitting coils (2, 3, 11, 12, 13, 30, 31, 32), and a toggle switch (20) which is configured to couple the alternating-current source (19) electrically to one of the coils in a controllable manner,
wherein the control device (6, 16) is configured to activate the toggle switch (20) in order to activate one of the respective transmitting coils (2, 3, 11, 12, 13, 30, 31, 32).

5. Energy transmission device (1, 10) according to one of the previous claims, wherein the control device (6, 16) is configured to determine the predetermined number dynamically, based on a limit value for the coupling factor between the respective transmitting coil (2, 3, 11, 12, 13, 30, 31, 32) and one of the receiving coils, wherein the control device (6, 16) is configured to sequentially activate only those coil pairs whose coupling factors are above the predetermined limit value.

6. Energy transmission method for the contactless transmission of electrical energy, comprising:
provision (S1) of a plurality of transmitting coils (2, 3, 11, 12, 13, 30, 31, 32) and a plurality of receiving coils (4, 5, 14, 15), and
sequential activation (S2) of a predetermined number of the transmitting coils (2, 3, 11, 12, 13, 30, 31, 32) in an energy transmission mode,
**characterized in that**, in the case of sequential activation of the transmitting coils (2, 3, 11, 12, 13, 30, 31, 32), the respective transmitting coil (2, 3, 11, 12, 13, 30, 31, 32) is activated next which has the greatest spacing from the last-activated transmitting coil (2, 3, 11, 12, 13, 30, 31, 32).

7. Energy transmission method according to Claim 6, wherein the respective coupling factor to the individual receiving coils (4, 5, 14, 15) is identified for each of the transmitting coils (2, 3, 11, 12, 13, 30, 31, 32) in an identification mode, and
the transmitting coils (2, 3, 11, 12, 13, 30, 31, 32) which are activated in the energy transmission mode are selected according to the coupling factor, based on the coil pair having the greatest coupling factor.

8. Energy transmission method according to either of previous Claims 6 and 7, wherein, in the case of sequential activation of the transmitting coils (2, 3, 11, 12, 13, 30, 31, 32), each of the transmitting coils (2, 3, 11, 12, 13, 30, 31, 32) is activated for a period of less than one second, in particular less than 500 milliseconds, less than 250 milliseconds, or less than 100 milliseconds.

9. Energy transmission method according to one of previous Claims 6 to 8, comprising generation of an alternating current for activating the transmitting coils (2, 3, 11, 12, 13, 30, 31, 32), and respectively electrically coupling the alternating current to the corresponding one of the transmitting coils (2, 3, 11, 12, 13, 30, 31, 32).

10. Energy transmission method according to one of previous Claims 6 to 9, wherein the predetermined number is determined dynamically, based on a limit value for the coupling factor between the respective transmitting coil (2, 3, 11, 12, 13, 30, 31, 32) and one of the receiving coils, wherein only those coil pairs whose coupling factors are above the predetermined limit value are activated.

## Revendications

1. Dispositif de transfert d'énergie (1, 10) pour le transfert d'énergie électrique sans contact,
comprenant une pluralité de bobines émettrices (2, 3, 11, 12, 13, 30, 31, 32) et une pluralité de bobines réceptrices (4, 5, 14, 15), et
comprenant un dispositif de commande (6, 16) conçu pour commander de manière séquentielle un nombre prédéterminé de bobines émettrices (2, 3, 11, 12, 13, 30, 31, 32) dans un mode de transfert d'énergie,
**caractérisé en ce que** le dispositif de commande (6, 16) est conçu, lorsque les bobines émettrices (2, 3, 11, 12, 13, 30, 31, 32) sont commandées de manière séquentielle, pour commander en tant que bobine suivante la bobine émettrice (2, 3, 11, 12, 13, 30, 31, 32) respective qui présente la plus grande distance par rapport à la bobine émettrice (2, 3, 11, 12, 13, 30, 31, 32) commandée en dernier.

2. Dispositif de transfert d'énergie (1, 10) selon la revendication 1, dans lequel le dispositif de commande (6, 16) est conçu, dans un mode d'identification de chacune des bobines émettrices (2, 3, 11, 12, 13, 30, 31, 32), pour identifier respectivement le facteur de couplage avec les différentes bobines réceptrices (4, 5, 14, 15) et pour sélectionner les bobines émettrices (2, 3, 11, 12, 13, 30, 31, 32) commandées dans le mode de transfert d'énergie en fonction du facteur de couplage au sein de la paire de bobines présentant le facteur de couplage le plus élevé.

3. Dispositif de transfert d'énergie (1, 10) selon l'une des revendications précédentes, dans lequel le dispositif de commande (6, 16) est conçu, lorsque les bobines émettrices (2, 3, 11, 12, 13, 30, 31, 32) sont commandées de manière séquentielle, pour commander chacune des bobines émettrices (2, 3, 11, 12, 13, 30, 31, 32) pendant une durée inférieure à une seconde, en particulier inférieure à 500 millisecondes, inférieure à 250 millisecondes ou inférieure à 100 millisecondes.

4. Dispositif de transfert d'énergie (1, 10) selon l'une des revendications précédentes, comportant une source de courant alternatif (19) qui est conçue pour générer un courant alternatif destiné à commander les bobines émettrices (2, 3, 11, 12, 13, 30, 31, 32), et un commutateur (20) qui est conçu pour coupler électriquement de manière commandée la source de courant alternatif (19) à l'une des bobines,
dans lequel le dispositif de commande (6, 16) est conçu pour commander le commutateur (20) afin de commander respectivement l'une des bobines émettrices (2, 3, 11, 12, 13, 30, 31, 32).

5. Dispositif de transfert d'énergie (1, 10) selon l'une des revendications précédentes, dans lequel le dispositif de commande (6, 16) est conçu pour déterminer dynamiquement le nombre prédéterminé sur la base d'une valeur limite du facteur de couplage entre la bobine émettrice (2, 3, 11, 12, 13, 30, 31, 32) respective et l'une des bobines réceptrices, dans lequel le dispositif de commande (6, 16) est conçu pour commander de manière séquentielle les seules paires de bobines dont les facteurs de couplage sont supérieurs à la valeur limite prédéterminée.

6. Procédé de transfert d'énergie pour le transfert d'énergie électrique sans contact, consistant à :
prévoir (S1) une pluralité de bobines émettrices (2, 3, 11, 12, 13, 30, 31, 32) et une pluralité de bobines réceptrices (4, 5, 14, 15), et
commander (S2) de manière séquentielle un nombre prédéterminé de bobines émettrices (2, 3, 11, 12, 13, 30, 31, 32) dans un mode de transfert d'énergie, **caractérisé en ce que**, lorsque les bobines émettrices (2, 3, 11, 12, 13, 30, 31, 32) sont commandées de manière séquentielle, la bobine émettrice (2, 3, 11, 12, 13, 30, 31, 32) qui présente la plus grande distance par rapport à la bobine émettrice (2, 3, 11, 12, 13, 30, 31, 32) commandée en dernier est commandée en tant que bobine suivante.

7. Procédé de transfert d'énergie selon la revendication 6, dans lequel, dans un mode d'identification de chacune des bobines émettrices (2, 3, 11, 12, 13, 30, 31, 32), le facteur de couplage respectif est identifié avec les différentes bobines réceptrices (4, 5, 14, 15) et,
les bobines émettrices (2, 3, 11, 12, 13, 30, 31, 32) commandées dans le mode de transfert d'énergie sont sélectionnées en fonction du facteur de couplage au sein de la paire de bobines présentant le facteur de couplage le plus élevé.

8. Procédé de transfert d'énergie selon l'une des revendications 6 ou 7 précédentes, dans lequel, lorsque les bobines émettrices (2, 3, 11, 12, 13, 30, 31, 32) sont commandées de manière séquentielle, chacune des bobines émettrices (2, 3, 11, 12, 13, 30, 31, 32) est commandée pendant une durée inférieure à une seconde, en particulier inférieure à 500 millisecondes, inférieure à 250 millisecondes ou inférieure à 100 millisecondes.

9. Procédé de transfert d'énergie selon l'une des revendications 6 à 8 précédentes, consistant à générer un courant alternatif destiné à commander les bobines émettrices (2, 3, 11, 12, 13, 30, 31, 32), et de manière respective, à coupler électriquement le courant alternatif à celles qui leur correspondent des bobines émettrices (2, 3, 11, 12, 13, 30, 31, 32).

10. Procédé de transfert d'énergie selon l'une des revendications 6 à 9 précédentes, dans lequel le nombre prédéterminé est déterminé dynamiquement sur la base d'une valeur limite du facteur de couplage entre la bobine émettrice (2, 3, 11, 12, 13, 30, 31, 32) respective et l'une des bobines réceptrices, dans lequel seules les paires de bobines dont les facteurs de couplage sont supérieurs à la valeur limite prédéterminée sont commandées de manière séquentielle.
